# EUROPÄISCHE PATENTSCHRIFT

(11) **EP 3 845 197 B1**
(45) Veröffentlichungstag und Bekanntmachung des Hinweises auf die Patenterteilung: **23.03.2022**
(21) Anmeldenummer: 20150234.1
(22) Anmeldetag: 03.01.2020
(51) Int. Cl.: A61C 1/08, A61C 13/10

(54) **VERFAHREN ZUM HERSTELLEN EINER FÜHRUNGSSCHIENE ZUR BEARBEITUNG VON PROTHESENZÄHNEN**
METHOD FOR PRODUCING A GUIDE RAIL FOR MACHINING PROSTHETIC TEETH
PROCÉDÉ DE FABRICATION D'UN RAIL DE GUIDAGE DESTINÉ AU TRAITEMENT DES DENTS PROTHÉTIQUES

(43) Veröffentlichungstag der Anmeldung: 07.07.2021
(73) Patentinhaber: Kulzer GmbH, 63450 Hanau (DE)
(72) Erfinder: DIEZ, Lars Hendrik, 63456 Hanau (DE); DEKERT, Stephan, 61273 Wehrheim (DE); RITZEL, Roger, 63599 Biebergemünd (DE)
(74) Vertreter: Schultheiss & Sterzel Patentanwälte PartG mbB

(56) Entgegenhaltungen:
- WO-A1-2012/155161
- WO-A1-2013/124452
- WO-A1-2015/134633
- WO-A1-2016/073053
- WO-A1-2016/169921
- WO-A1-2016/176767
- US-A1- 2019 167 394

## Beschreibung

Die Erfindung betrifft ein Verfahren zum Herstellen einer Führungsschiene, die zum Führen eines beweglichen Fräskopfs bei der Bearbeitung von vorkonfektionierten Prothesenzähnen vorgesehen ist. Die Erfindung betrifft auch eine Vorrichtung zum Umsetzen des Verfahrens sowie ein Verfahren zum basalen Kürzen von Prothesenzähnen zur Herstellung einer Dentalprothese und ein Verfahren zum Herstellen einer Dentalprothese mit einem solchen Verfahren zum Herstellen einer Führungsschiene. Die Erfindung betrifft ferner eine Führungsschiene zum Führen eines beweglichen Fräskopfs bei der Bearbeitung von vorkonfektionierten Prothesenzähnen, hergestellt mit einem solchen Verfahren zum Herstellen einer Führungsschiene und eine Dentalprothese hergestellt mit einem solchen Verfahren zum Herstellen einer Dentalprothese.

Neben handwerklichen Techniken gewinnen digitale Fertigungsmethoden auch im Dentalbereich immer mehr an Bedeutung. Zahnersatz und andere dentale Formteile, wie zum Beispiel Kronen, Brücken und 3-dimensionale Modelle des Mundraums eines Patienten, werden seit einigen Jahren mittels CAD/CAM-Technologien subtraktiv in Fräsverfahren hergestellt (CAM - Computer-Aided Manufacturing, Deutsch: rechnerunterstützte Fertigung, CAD - Computer-Aided Design, Deutsch: rechnerunterstützte Konstruktion).

Ferner gewinnen generative CAM-Verfahren wie Stereolithographie und DLP (Digital Light Processing) für Dentalprodukte auf Polymerbasis wie zum Beispiel für Provisorien, Prothesen, KFO-Apparaturen (Kiefer-Orthopädie-Apparaturen), Aufbissschienen, Bohrschablonen oder Dentalmodellen immer mehr an Bedeutung.

Es gibt Verfahren, wie beispielsweise die aus der DE 10 2009 056 752 A1 oder der WO 2013/124 452 A1 bekannten Verfahren, bei denen eine dentale Teil- beziehungsweise Totalprothese digital aufgestellt und über CAD/CAM-Verfahren produziert wird. Aus dem Patent DE 103 04 757 B4 ist ein Verfahren zur Herstellung von Zahnersatz bekannt, bei dem eine virtuelle Aufstellung der Zähne in ein virtuelles Modell erfolgt und die Herstellung einer Prothesenbasis auf der Basis des virtuellen Modells erfolgt. Die EP 2 742 906 A1 offenbart ein Verfahren, bei dem ein Zahnbogen mit einer Abformmasse verbunden wird, wobei die Abformmasse in einem individualisierten Abformlöffel enthalten ist und einen Abdruck der Mundraumsituation des Patienten enthält. Die Oberfläche der Form mit dem Zahnbogen wird digitalisiert und anschließend rechnerisch ein virtuelles Modell des Zahnbogens möglichst passend in dem virtuellen Modell der Prothesenbasis positioniert und orientiert. Die WO 2016/091 762 A1 offenbart ein Verfahren zur Herstellung einer Dentalprothese, bei dem eine Schablone erzeugt wird, mit der mehrere Prothesenzähne in der gewünschten Lage und Orientierung zueinander an einer Prothesenbasis befestigt werden können. Aus dem Patent DE 103 04 757 B4 ist ein Verfahren zur Herstellung von Zahnersatz bekannt, bei dem eine virtuelle Aufstellung der Zähne in ein virtuelles Modell erfolgt und die Herstellung einer Prothesenbasis auf der Basis des virtuellen Modells erfolgt. Die WO 2016/110 392 A1 offenbart ein Verfahren zur Herstellung einer Dentalprothese, bei dem ein plastisch verformbares Verbindungsmittel in Zahnfächer einer Prothesenbasis eingebracht wird, um eine manuelle Korrektur der Ausrichtung der Prothesenzähne in der Prothesenbasis zu ermöglichen.

Bei der Herstellung von herausnehmbarem Zahnersatz, wie dentalen Voll- und Teilprothesen, die mit Hilfe digitaler Daten mit einer CAD-Konstruktion gefertigt wurden, gibt es technische Lösungsansätze, die Daten der Prothesenbasis und der Zähne zu separieren. Die Prothesenbasis kann dabei durch ein generatives oder auch subtraktives Fertigungsverfahren hergestellt werden. Als Prothesenzähne kommen vorkonfektionierte Kunststoffzähne oder auch individuell hergestellte Prothesenzähne oder Zahnbögen aus den gleichen Ausgangsmaterialien in Frage. In jedem Fall müssen an der Prothesenbasis Zahnfächer zur Aufnahme dieser Prothesenzähne vorgesehen sein, in welche dann in einem nachgeschalteten manuellen Fertigungsschritt, die Prothesenzähne oder die Zahnbögen, zum Beispiel durch Kleben, befestigt werden.

Für den Prozess der digitalen Totalprothesen- (full denture) oder Teilprothesenfertigung ist es nötig, die vorkonfektionierte Prothesenzähne basal zu kürzen, um die Zahnhöhe an den Patienten-Kiefer beziehungsweise an die Mundraumsituation des Patienten anzupassen.

Aus der EP 2 571 451 B1 und der EP 2 666 438 A2 sind Verfahren hierfür bekannt, bei denen vorkonfektionierte Prothesenzähne in einer Halterung in Wachs eingebettet werden und anschließend basal mittels CAM-Verfahren abgefräst werden. Die so gekürzten Prothesenzähne werden von dem Wachs befreit und anschließend in eine Prothesenbasis eingesetzt und dort eingeklebt, um eine Dentalprothese herzustellen. Hieran ist nachteilig, dass die Prothesenzähne von den Wachsresten befreit und gereinigt werden müssen, bevor sie in die Prothesenbasis eingesetzt werden können. Es ist notwendig, die Prothesenzähne basal zu kürzen, um die Zahnhöhe an den Kiefer des Patienten anzupassen, also um die Bisshöhe der Dentalprothese passend zu den Bedürfnissen des Patienten einzustellen. Zudem sind CAM-Fräsen teuer und aufwendig und nicht in jedem zahntechnischen Labor vorhanden.

Mit der WO 2017/005 905 A1 wird vorgeschlagen, einen Satz Prothesenzähne, die in einer Schrumpffolie fixiert sind, zu bearbeiten. Dabei muss die Schrumpffolie mit der CAM-Vorrichtung in den Bereichen entfernt werden, an denen die Prothesenzähne bearbeitet werden sollen. Es ist schwierig bei dieser Fixierung eine exakte Bearbeitung der Prothesenzähne zu erreichen.

Die WO 2016/176 767 A1 offenbart eine Vorrichtung eine Schnittführung zum Herstellen einer okklusalen Öffnung in einer Dentalprothese. Aus der WO 2015/134 633 A1 ist ein chirurgischer Roboter zur Vorbereitung eines dentalen Implantats bekannt. Die WO 2016/073 053 A1 offenbart eine Vorrichtung zum Ausrichten eines Bohrers gegen den Kiefer zum Herstellen eine Bohrung im Kieferknochen für Implantate. Aus der WO 2012/155 161 A1 ist ein Prothesenzahnträger zur Bearbeitung von Prothesenzähnen, wobei ein Kronenbereich der Prothesenzähne in eine Trägerschicht eingebettet ist.

Aus der US 2019/0 167 394 A1 ist eine Schablone bekannt, bei der die basal zu bearbeitenden Prothesenzähne an den Stellen abgedeckt werden, die nicht bearbeitet und damit gekürzt werden sollen. Die freiliegenden Bereiche der basalen Enden der Prothesenzähne können mit der Schablone auf einfache Weise manuell abgefräst werden. Nachteilig ist hieran, dass es im Endergebnis weitgehend auf das handwerkliche Geschick des Bearbeiters ankommt, um ein möglichst genaues basales Kürzen der Prothesenzähne zu ermöglichen. Die Breite des Klebespalts zwischen den gekürzten Prothesenzähnen und den Fächern in der Prothesenbasis kann dadurch variieren, so dass es nicht ohne weiteres Möglich ist, eine definierte Menge eines Klebers zum Einkleben der Prothesenzähne in die Prothesenbasis zu verwenden. Aufgrund der manuellen Bearbeitung ist eine Standardisierung oder gar eine Automatisierung des dort angegebenen Bearbeitungsverfahrens nicht möglich.

Die Aufgabe der Erfindung besteht also darin, die Nachteile des Stands der Technik zu überwinden. Insbesondere soll eine Möglichkeit gefunden werden, das Verfahren weiter zu vereinfachen und eine Möglichkeit gefunden werden, mit der eine Standardisierung des Verfahrens erreicht werden kann. Zudem sollen die bei modernen Verfahren ohnehin benötigten und meist auch bereits vorhandenen Daten zur digitalen Konstruktion der Dentalprothese, wie CAD-Daten, genutzt werden. Diese sollen dabei ein möglichst genaues Kürzen der Prothesenzähne und damit die Herstellung einer dem virtuellen Modell möglichst genau entsprechende Dentalprothese erlauben. Das Verfahren soll für die Bearbeitung von vorkonfektionierten Prothesenzähnen geeignet und vorgesehen sein oder die Bearbeitung beinhalten. Das Verfahren soll möglichst auch von ungeschultem Personal oder vollautomatisch durchführbar sein.

Die Aufgaben der Erfindung werden gelöst durch ein Verfahren zum Herstellen einer Führungsschiene, die zum Führen eines beweglichen Fräskopfs oder eines Schneidwerkzeugs bei der Bearbeitung von vorkonfektionierten Prothesenzähnen vorgesehen ist, wobei das Verfahren durch die folgenden Schritte gekennzeichnet ist:
A) Erzeugen oder Bereitstellen eines virtuellen 3D-Modells einer Dentalprothese mit einem virtuellen Modell einer Prothesenbasis als Zahnfleischimitat und mit zumindest einem virtuellen Modell von zumindest einem in der Prothesenbasis anzuordnenden bearbeiteten Prothesenzahn zur Nachbildung zumindest eines Zahns;
B) Berechnen eines von zumindest einem vorkonfektionierten Prothesenzahn zu entfernenden Volumens durch Vergleichen des zumindest einen virtuellen Modells des zumindest einen bearbeiteten Prothesenzahns mit zumindest einem virtuellen Modell des zumindest einen vorkonfektionierten Prothesenzahns mit Hilfe eines CAD-Verfahrens;
C) Erzeugen eines virtuellen Modells einer Führungsschiene mit einem CAD-Verfahren, die an einer Halterung zur Befestigung des zumindest einen vorkonfektionierten Prothesenzahns fixiert oder fixierbar ist, wobei die Führungsschiene derart modelliert wird und die Halterung relativ zu der Führungsschiene derart positioniert wird und der zumindest eine vorkonfektionierte Prothesenzahn in der Halterung derart ausgerichtet befestigt wird, dass die Führungsschiene ein Führen zumindest eines Fräskopfs und/oder zumindest eines Schneidwerkzeugs mit bekannten Abmessungen ermöglicht, so dass mit dem zumindest einen Fräskopf das von dem zumindest einen vorkonfektionierten Prothesenzahn zu entfernende Volumen überfahren wird und/oder mit dem zumindest einen Schneidwerkzeug das von dem zumindest einen vorkonfektionierten Prothesenzahn zu entfernende Volumen abgeschnitten wird; und
D) Herstellen einer physischen Führungsschiene auf Basis des virtuellen Modells der Führungsschiene mit einem CAM-Verfahren.

Bevorzugt wird die Führungsschiene derart modelliert und die Halterung relativ zu der Führungsschiene derart positioniert und der zumindest eine vorkonfektionierte Prothesenzahn in der Halterung derart ausgerichtet befestigt, dass die Führungsschiene ein Führen zumindest eines Fräskopfs mit bekannten Abmessungen oder zumindest eines Schneidwerkzeugs mit bekannten Abmessungen ermöglicht, so dass mit dem zumindest einen Fräskopf oder dem zumindest einen Schneidwerkzeugs das von dem zumindest einen vorkonfektionierten Prothesenzahn zu entfernende Volumen vollständig überfahren oder abgetrennt wird, besonders bevorzugt vollständig abgefräst oder abgeschnitten wird.

Bevorzugt erfolgt das Herstellen der physischen Führungsschiene in Schritt D) zusammen mit einem Herstellen der Halterung mit einem CAM-Verfahren.

Es ist im Rahmen der vorliegenden Erfindung möglich, dass die Halterung den zu bearbeitenden zumindest einen vorkonfektionierten Prothesenzahn vollständig einbettet. Dann müssen Teile der Halterung zusammen mit dem zumindest einen vorkonfektionierten Prothesenzahn abgefräst werden. Es wird jedoch erfindungsgemäß bevorzugt, dass die Halterung nicht mit dem zumindest einen vorkonfektionierten Prothesenzahn bearbeitet beziehungsweise abgefräst oder abgeschnitten werden muss und daher die Halterung derart geformt wird, dass das von dem zumindest einen vorkonfektionierten Prothesenzahn zu entfernende Volumen freiliegt.

Es kann vorgesehen sein, dass die Halterung den zumindest einen vorkonfektionierten Prothesenzahn derart befestigt, dass sich der zumindest eine vorkonfektionierte Prothesenzahn nicht aufgrund der beim Fräsen oder Schneiden auftretenden Kräfte gegen die Halterung bewegt.

Wenn mehrere Fräsköpfe mit unterschiedlich großen Durchmessern als der zumindest eine Fräskopf verwendet werden, so wird das von dem zumindest einen vorkonfektionierten Prothesenzahn zu entfernende Volumen nur mit dem Fräskopf mit dem größten Durchmesser vollständig überfahren. Die Fräsköpfe mit kleinerem Durchmesser überfahren dementsprechend nur einen Teilbereich des von dem zumindest einen vorkonfektionierten Prothesenzahn zu entfernenden Volumens oder sogar gar keinen Bereich des von dem zumindest einen vorkonfektionierten Prothesenzahn zu entfernenden Volumens. Ähnliches ist auch vorstellbar, wenn unterschiedliche Fräsköpfe mit voneinander abweichenden axialen Längen verwendet werden. Das Fräsen von Teilbereichen des zumindest einen vorkonfektionierten Prothesenzahns hat den Vorteil, dass die zeitliche Dauer des Fräsens und die beim Fräsen auftretenden Kräfte begrenzt werden.

Bei erfindungsgemäßen Verfahren kann auch vorgesehen sein, dass die Führungsschiene ein Führen des zumindest einen Fräskopfs und/oder des zumindest einen Schneidwerkzeugs entlang einer Linie oder entlang einer Fläche im Raum ermöglicht oder erzwingt.

Hierdurch wird das nachfolgende Fräsen oder Schneiden eindeutig geführt und dadurch besonders einfach umsetzbar. Ferner werden dadurch mögliche Fehlerquellen verhindert.

Des Weiteren kann vorgesehen sein, dass in Schritt C) ein Erzeugen eines virtuellen Modells der Halterung mit einem CAD-Verfahren erfolgt und in Schritt D) eine Herstellung einer physischen Halterung anhand des virtuellen Modells der Halterung mit einem CAM-Verfahren erfolgt.

Hierdurch wird die Möglichkeit genutzt, auf die Lage und die Position des zumindest einen vorkonfektionierten Prothesenzahns Einfluss durch die Modellierung der Halterung zu nehmen.

Die Halterung ist vorzugsweise zwei- oder mehrteilig geformt, um den zumindest einen vorkonfektionierten Prothesenzahn auf einfache Weise in der Halterung befestigen zu können.

Die Halterung soll erfindungsgemäß bevorzugt additiv zu fertigen sein oder mit einem additiven Herstellungsverfahren gefertigt werden. Als additive Herstellungsverfahren eignen sich insbesondere DLP-Verfahren (Digital Light Processing) und 3D-Druckverfahren im Allgemeinen.

Die Führungsschiene soll möglichst automatisch mit Hilfe eines additiven oder subtraktiven Verfahrens hergestellt werden, wobei additive Verfahren erfindungsgemäß bevorzugt werden.

Es kann auch vorgesehen sein, dass es sich bei der Halterung, um ein vorgefertigtes Standardbauteil handelt und nur die Führungsschienen individuell hergestellt werden. Die Halterung kann dann für den einmaligen Gebrauch vorgesehen sein. Die Halterung kann hierzu immer mit angefräst werden.

Bevorzugt kann auch vorgesehen sein, dass die Halterung derart modelliert wird, dass das zu entfernende Volumen des zumindest einen vorkonfektionierten Prothesenzahns aus der Halterung vorsteht, bevorzugt nur das zu entfernende Volumen des zumindest einen vorkonfektionierten Prothesenzahns aus der Halterung vorsteht und besonders bevorzugt die Halterung an allen angrenzenden Oberflächen des zu entfernenden Volumens an dem zumindest einen vorkonfektionierten Prothesenzahn anliegt.

Hierdurch muss die Halterung nicht zusammen mit dem Prothesenzahn abgefräst werden. Ferner kann der zumindest eine vorkonfektionierte Prothesenzahn in der Halterung besonders stabil gehalten werden, um die beim Fräsen auftretenden Kräfte gut aufnehmen zu können, ohne dass sich der zumindest eine vorkonfektionierte Prothesenzahn in der Halterung bewegt.

Gemäß einer bevorzugten Weiterbildung des erfindungsgemäßen Verfahrens kann vorgesehen sein, dass in Schritt C) an dem virtuellen Modell der Führungsschiene oder an einem virtuellen Modell der Halterung oder an den virtuellen Modellen der Führungsschiene und der Halterung Befestigungselemente modelliert werden, mit denen die Führungsschiene und die Halterung aneinander in einer eindeutigen Position und Ausrichtung fixierbar sind, wobei bevorzugt nach Schritt D) die physische Führungsschiene und die physische Halterung über die Befestigungselemente aneinander fixiert werden.

Hierdurch können auf einfache Weise, nämlich durch die Platzierung von Befestigungselementen, die Position und die Orientierung der Halterung gegen die Führungsschiene definiert werden und gleichzeitig dazu genutzt werden, dass durch eine einfache Bewegung des zumindest einen Fräskopfs und/oder des zumindest einen Schneidwerkzeugs das von dem zumindest einen vorkonfektionierten Prothesenzahn zu entfernende Volumen überfahren wird.

Ferner kann vorgesehen sein, dass in Schritt B) zumindest eine Grenzlinie auf der Oberfläche des zumindest einen virtuellen Modells des vorkonfektionierten Prothesenzahns berechnet wird, die das zu entfernende Volumen begrenzt.

Hierdurch kann auf einfache Weise das zu entfernende Volumen eingegrenzt werden und in rechnerisch ressourcenschonender Weise das Verfahren umgesetzt werden, indem die Grenzlinie zur Berechnung des virtuellen Modells der Führungsschiene und gegebenenfalls des virtuellen Modells der Halterung genutzt wird.

Dabei kann vorgesehen sein, dass in Schritt C) ein Erzeugen zumindest eines virtuellen Modells zumindest einer Schablone als die Halterung der Führungsschiene erfolgt, wobei die zumindest eine Schablone eine innere Oberfläche aufweist, wobei die innere Oberfläche bereichsweise einer Negativform des zumindest einen vorkonfektionierten Prothesenzahns entspricht, wobei die zumindest eine Schablone im zumindest einen virtuellen Modell wenigstens eine Öffnung aufweist, die durch die zumindest eine Grenzlinie begrenzt wird, und wobei die Oberflächen des zumindest einen virtuellen Modells der zumindest einen Schablone derart geformt werden, dass das zumindest eine virtuelle Modell des zumindest einen vorkonfektionierten Prothesenzahns ohne Überlappung in das zumindest eine virtuelle Modell der zumindest einen Schablone einsetzbar ist.

Dadurch wird mit dem Verfahren eine stabile Halterung erzeugt, die zur robusten Befestigung des zumindest einen vorkonfektionierten Prothesenzahns während dem Fräsen und/oder Schneiden geeignet ist. Zudem kann auf diese Weise die Position und die Orientierung des zumindest einen vorkonfektionierten Prothesenzahns gegen die Führungsschiene beliebig festgelegt werden und so die Führungsschiene einfach aufgebaut werden und damit das Führen des zumindest einen Fräskopfs und/oder des zumindest einen Schneidwerkzeugs in der Führungsschiene vereinfacht werden.

Ferner kann vorgesehen sein, dass in Schritt D) ein Herstellen zumindest einer physischen Schablone als Halterung der Führungsschiene auf Basis des zumindest einen virtuellen Modells der zumindest einen Schablone mit einem CAM-Verfahren erfolgt.

Hierdurch wird das Verfahren komplettiert und weiter automatisiert.

Gemäß einer bevorzugten Weiterbildung des erfindungsgemäßen Verfahrens kann vorgesehen sein, dass die Führungsschiene derart modelliert wird, dass sich die Ausrichtung der Drehachse des zumindest einen Fräskopfs und/oder die Lage einer Schneide des zumindest einen Schneidwerkzeugs beim Führen in der Führungsschiene nicht ändert und nur ein translatorisches Verschieben der Drehachse oder der Lage der Schneide erfolgt, wobei bevorzugt die Halterung passend modelliert wird und/oder die Befestigung der Halterung an der Führungsschiene passend modelliert wird.

Dass sich die Ausrichtung der Drehachse des zumindest einen Fräskopfs nicht ändert, bedeutet, dass sich die Richtung des axialen Vektors der Drehbewegung im Raum nicht ändert. Ein Kippen der Drehachse erfolgt demzufolge nicht. Das Gleiche gilt analog für die Lage der Scheide des zumindest einen Schneidwerkzeugs.

Hiermit wird erreicht, dass der zumindest eine Fräskopf und/oder das zumindest eine Schneidwerkzeug besonders einfach in der Führungsschiene zu führen ist.

Des Weiteren kann auch vorgesehen sein, dass das virtuelle Modell der Führungsschiene mit zwei einander gegenüberliegenden Führungsschienenteilen erzeugt wird, wobei die Halterung zur Befestigung des zumindest einen vorkonfektionierten Prothesenzahns zwischen den Führungsschienenteilen angeordnet wird und der zumindest eine Fräskopf und/oder das zumindest eine Schneidwerkzeug zwischen den Führungsschienenteilen geführt wird, wobei vorzugsweise die beiden Führungsschienenteile die gleichen Führungsbahnen zum Führen des zumindest einen Fräskopfs und/oder des zumindest einen Schneidwerkzeugs aufweisen.

Hierdurch kann der zumindest eine Fräskopf und/oder das zumindest eine Schneidwerkzeug besonders stabil und einfach gegen den zumindest einen vorkonfektionierten Prothesenzahn geführt werden.

Bevorzugt kann ferner vorgesehen sein, dass die zwei Führungsschienenteile einzeln lösbar an der Halterung und/oder aneinander befestigt werden beziehungsweise lösbar an der Halterung befestigbar und/oder aneinander befestigbar sind. Die zwei Führungsschienenteile können ebenfalls wieder mehrteilig ausgeführt werden, wobei die Teile der Führungsschienenteile aneinander und/oder an der Halterung befestigbar sind.

Bevorzugt kann ferner vorgesehen sein, dass die Halterung eine mehrteilige Halterung ist, in der der zumindest eine vorkonfektionierte Prothesenzahn lösbar zu befestigen ist, wobei vorzugsweise die Teile der mehrteiligen Halterung lösbar aneinander zu befestigen sind.

Hierdurch kann der zumindest eine vorkonfektionierte Prothesenzahn gut bearbeitet und nach der Bearbeitung leicht entnommen und zum Herstellen der Dentalprothese verwendet werden.

Auch kann vorgesehen sein, dass das zumindest eine virtuelle Modell von zumindest dem in der Prothesenbasis anzuordnenden bearbeiteten Prothesenzahn in Schritt A) derart erzeugt wird, dass die basale Oberfläche des zumindest einen virtuellen Modells des zumindest einen bearbeiteten Prothesenzahns durch zumindest einen sich um seine Drehachse drehenden und entlang einer Linie geführten Fräskopf mit bekannter rotationssymmetrischer Form zu formen ist.

Hierdurch wird das virtuelle Modell des zumindest einen Prothesenzahns auf die verwendbaren Fräsköpfe angepasst. Dadurch kann das Ergebnis in Form des bearbeiteten Prothesenzahns auf das mit den Fräsköpfen erreichbare Ergebnis optimiert werden. Dem Anwender kann dabei automatisch angegeben werden (beispielsweise auf einer Anzeigeeinrichtung wie einem Bildschirm angezeigt werden), welchen Fräskopf er als letzten Fräskopf zur basalen Bearbeitung des zumindest einen vorkonfektionierten Prothesenzahns verwenden soll oder welche Fräsköpfe er in welcher Reihenfolge zur basalen Bearbeitung des zumindest einen vorkonfektionierten Prothesenzahns verwenden soll. Alternativ kann bei einer vollständigen Automatisierung der gewünschte letzte Fräskopf auch maschinell ausgewählt und eingespannt werden.

Die äußere rotationssymmetrische Form des Fräskopfs bestimmt die maximalen Krümmungsradien, die mit dem Fräskopf erzeugt werden können und die Fräsfront, die mit dem Fräskopf erzeugbar ist. Durch eine größere Auswahl unterschiedlicher Fräsköpfe kann die basale Oberfläche des zumindest einen bearbeiteten Prothesenzahns unterschiedlicher geformt werden beziehungsweise feiner strukturiert werden.

Analoge Überlegungen gelten auch für das zumindest eine Schneidwerkzeug.

Die der Erfindung zugrundeliegenden Aufgaben werden auch gelöst durch ein Verfahren zum basalen Kürzen von Prothesenzähnen zur Herstellung einer Dentalprothese aufweisend ein erfindungsgemäßes Verfahren zum Herstellen einer Führungsschiene, wobei nach Schritt D) zumindest ein vorkonfektionierter Prothesenzahn, der in der Halterung befestigt ist oder wird, basal mit dem zumindest einen Fräskopf und/oder dem zumindest einen Schneidwerkzeus bearbeitet wird, wobei der zumindest eine Fräskopf und/oder das zumindest eine Schneidwerkzeug mit der physischen Führungsschiene geführt wird, wobei dabei das zu entfernende Volumen des zumindest einen vorkonfektionierten Prothesenzahns abgefräst wird, wobei vorzugsweise der zumindest eine Fräskopf und/oder das zumindest eine Schneidwerkzeug manuell in der physischen Führungsschiene geführt wird.

Hierdurch ergeben sich die für die Führungsschiene und der Halterung ergebenden Vorteile für das Verfahren zum basalen Kürzen von Prothesenzähnen.

Dabei kann vorgesehen sein, dass bei dem Verfahren mehrere Fräsköpfe mit unterschiedlichem Durchmesser der Fräsköpfe verwendet werden, wobei die Fräsköpfe mit steigendem Durchmesser nacheinander in der physischen Führungsschiene geführt werden und/oder bei dem Verfahren mehrere Schneidwerkzeuge mit unterschiedlichen Schneidebenen verwendet werden, wobei Schneiden mit Schneidebenen geführt werden, die nacheinander immer tiefer in die basalen Seiten der Prothesenzähne schneiden.

Hierdurch kann der zumindest eine vorkonfektionierte Prothesenzahn schichtweise abgetragen werden, so dass geringere Kräfte auf die Fräsköpfe, die Schneiden und den zumindest einen vorkonfektionierten Prothesenzahn wirken.

Die der vorliegenden Erfindung zugrundeliegenden Aufgaben werden des Weiteren gelöst durch ein Verfahren zum Herstellen einer Dentalprothese aufweisend ein erfindungsgemäßes Verfahren zum basalen Kürzen von Prothesenzähnen, wobei nach dem basalen Kürzen des zumindest einen vorkonfektionierten Prothesenzahns der zumindest eine bearbeitete Prothesenzahn in einer Prothesenbasis als Zahnfleischimitat befestigt wird, insbesondere eingeklebt wird.

Hierdurch werden die sich aus der vereinfachten basalen Bearbeitung der Prothesenzähne ergebenden Vorteile zur Herstellung einer Dentalprothese genutzt.

Dabei kann vorgesehen sein, dass die Prothesenbasis mit Hilfe eines CAM-Verfahrens anhand des virtuellen Modells der Prothesenbasis nach Schritt A) erzeugt wird.

Hierdurch wird sichergestellt, dass der bearbeitete zumindest eine Prothesenzahn zu der Prothesenbasis passend geformt ist und so die modellierte Dentalprothese realisiert wird.

Die der vorliegenden Erfindung zugrundeliegenden Aufgaben werden auch gelöst durch eine Vorrichtung zum Umsetzen eines erfindungsgemäßen Verfahrens, wobei die Vorrichtung ein Berechnungsmodul zur Modellierung einer virtuellen Form der Führungsschiene aus den Daten von einem von vorkonfektionierten Prothesenzähnen zu entfernenden Volumen gemäß Verfahrensschritt C) aufweist und vorzugsweise eine CAM-Vorrichtung, insbesondere einen 3D-Drucker, zum Herstellen der Führungsschiene umfasst oder mit einer solchen CAM-Vorrichtung über eine Schnittstelle der Vorrichtung zur Umsetzung des Verfahrensschritts D) verbunden oder verbindbar ist.

Die Vorrichtung leistet dabei bevorzugt die mit dem erfindungsgemäßen Verfahren geschilderten Verfahrensschritte
Auch werden die der vorliegenden Erfindung zugrundeliegenden Aufgaben gelöst durch eine Führungsschiene zum Führen eines beweglichen Fräskopfs und/oder eines beweglichen Schneidwerkzeugs bei der Bearbeitung von vorkonfektionierten Prothesenzähnen hergestellt mit einem erfindungsgemäßen Verfahren zum Herstellen einer Führungsschiene.

Die Führungsschiene hat dann die zu dem Verfahren genannten Vorteile.

Dabei kann vorgesehen sein, dass die Führungsschiene fest mit einer Halterung verbunden ist oder in einer bestimmten Position verbindbar ist, so dass ein zu entfernendes Volumen des zumindest einen vorkonfektionierten Prothesenzahns an dessen basaler Seite mit zumindest einem in der Führungsschiene geführten Fräskopf und/oder Schneidwerkzeug zu entfernen ist.

Hierdurch wird die Führungsschiene beziehungsweise die Vorrichtung mit der Führungsschiene weiter komplettiert.

Die Führungsschiene und/oder die Halterung können zweiteilig oder mehrteilig sein. Ferner können die Teile der Führungsschiene und/oder der Halterung aneinander befestigbar sein.

Schließlich werden die der vorliegenden Erfindung zugrundeliegenden auch gelöst durch eine Dentalprothese hergestellt mit einem erfindungsgemäßen Verfahren, bei dem der zumindest eine bearbeitete Prothesenzahn über eine basale Oberfläche, die mit zumindest einem in einer Führungsschiene geführten Fräskopf und/oder Schneidwerkzeug bearbeitet ist, mit der Prothesenbasis verbunden ist.

Hierdurch ergeben sich die für das Verfahren angegebenen Vorteile für die so hergestellte Dentalprothese.

Die mit dem erfindungsgemäßen Verfahren basal bearbeiteten Prothesenzähne lassen sich von mit einer computergesteuerten Fräse basal bearbeiteten oder freihändig manuell basal bearbeiteten Prothesenzähnen dadurch unterscheiden, dass die Frässpuren oder Schnittspuren von mit dem erfindungsgemäßen Verfahren bearbeiteten Prothesenzähne entlang einer Linie beziehungsweise Fläche geführt sind. Hierdurch ergeben sich nämlich typische Schliffbilder und Riefen an den bearbeiteten Oberflächen, die von den üblicherweise mit wechselnden Winkeln bei freihändiger Bearbeitung oder schichtweisen und gerasterten Bearbeitungen bei computergesteuerten Fräsen abweichen.

Der Erfindung liegt die überraschende Erkenntnis zugrunde, dass es durch individualisierte Führungsschienen gelingt, fixierte vorkonfektionierte Prothesenzähne basal mit einem durch die Führungsschiene geführten Fräskopf und/oder einem durch die Führungsschiene geführten Schneidwerkzeug zu kürzen und zwar um ein anhand eines Computermodells berechnetes zu entfernendes Volumen mit definierten Abmessungen, wobei zur Berechnung der Form der Führungsschiene die virtuellen Modelle der zu kürzenden vorkonfektionierten Prothesenzähne verwendet werden. Die virtuellen Modelle der zu kürzenden vorkonfektionierten Prothesenzähne sind idealerweise ohnehin vorhanden oder können im Rahmen des erfindungsgemäßen Verfahrens berechnet werden. Als Ergebnis des erfindungsgemäßen Verfahrens erhält man eine individualisierte Führungsschiene, die unmittelbar zum manuellen Kürzen der vorkonfektionierten Prothesenzähne unter Zuhilfenahme der Führungsschiene verwendbar ist. Das Kürzen kann auf einfache Weise mittels zumindest eines manuell in der Führungsschiene geführten Fräskopfs und/oder Schneidwerkzeugs erfolgen.

Die hier beschriebene Erfindung ermöglich das Kürzen der Prothesenzähne ohne die Verwendung einer Fräsmaschine durch eine additiv gefertigte Führungsschiene und einem zahntechnischen Handstück mit einem Fräskopf zum subtraktiven Bearbeiten der Prothesenzähne.

Wie im Stand der Technik wird mit einer dentalen CAD-Software eine digitale Aufstellung und Modellierungen einer Prothesenbasis durchgeführt. In diesem Prozess werden die basal zu kürzenden vorkonfektionierten Prothesenzähne lokalisiert und ein CAD-Model des gekürzten Prothesenzahns erstellt. Im nächsten Schritt erstellt die CAD-Software eine Vorrichtung zur Halterung der Prothesenzähne, welche es ermöglicht, die vorkonfektionierten Prothesenzähne einzusetzen. Die zu entfernenden Bereiche ragen aus der Halterung heraus. Ferner wird eine individuell an die abzufräsenden Bereiche der vorkonfektionierten Prothesenzähne angepasste Führungsschiene zum Führen eines Fräskopfs mit bekannten Abmessungen oder eines Schneidwerkzeugs mit bekannten Abmessungen hergestellt, die das Führen des Fräskopfs oder des Schneidwerkzeugs entlang einer Führungsbahn über die Halterung ermöglicht und die es ferner ermöglich, mit einem speziellen Werkzeug für ein zahntechnisches Handstück eine genauere Bearbeitung der in der Halterung fixierten vorkonfektionierten Prothesenzähne durchzuführen. Die Führungsschiene ist vorzugsweise mehrteilig und teilbar ausgeführt und kann an der Halterung in einer definierten Position befestigt werden.

Zum Kürzen der Prothesenzähne wird der Fräskopf in das zahntechnische Handstück eingespannt und in die Führungsschiene über der Halterung eingeführt. Durch Verschieben des Fräskopfs innerhalb der Führungsschiene werden die Vorkonfektionierten Prothesenzähne gekürzt.

Die Halterung und die Führungsschiene werden additiv gefertigt, beispielsweise durch einen 3D-Druck. Es ist möglich, die Halterung und die Führungsschiene zusammen mit der Prothesenbasis herzustellen.

Die aus der Halterung überstehenden Bereiche werden mit einem zahntechnischen Handstück mit dem Fräskopf abgetragen, indem eine manuell bedienbare Fräse, wie beispielsweise ein Dremel, mit den Führungsschienen über die aus der Halterung herausragenden basalen Enden der gehaltenen vorkonfektionierten Prothesenzähne gefahren wird. Die Halterung ist vorzugsweise mehrteilig und teilbar.

Sollte eine starke basale Kürzung der vorkonfektionierten Prothesenzähne nötig sein, ist es möglich, über Fräsköpfe mit unterschiedlichen Durchmessern den Materialabtrag pro Anwendung eines Fräskopfs zu begrenzen, um so einer zu großen Bearbeitung in einem einzelnen Arbeitsschritt und damit einer zu großen mechanischen Belastung der Prothesenzähne vorzubeugen.

Die vorliegende Erfindung erlaubt ein Einsetzen von ästhetischen Konfektionszähnen in additiv gefertigte Prothesenbasen, statt additiv gefertigte monochrome Prothesenzähne verwenden zu müssen. Gleichzeitig kann ein basales Kürzen der Konfektionszähne nach CAD-Model ohne Laborfräsmaschine durchgeführt werden. Ferner ergibt sich eine Kostenersparnis, da normale vorkonfektionierte Prothesenzähne gekürzt werden können, wobei keine eingegossenen und positionierten Konfektionszähne in Wachs nötig sind.

Im Folgenden werden Ausführungsbeispiele der Erfindung anhand von acht schematisch dargestellten Figuren und einem Flussdiagramm erläutert, ohne jedoch dabei die Erfindung zu beschränken. Dabei zeigt:
Figur 1: eine schematische perspektivische Ansicht einer erfindungsgemäßen Führungsschiene mit eingestecktem Fräskopf, wobei die Führungsschiene mit einem erfindungsgemäßen Verfahren hergestellt wurde,
Figur 2: eine schematische perspektivische Längsquerschnittansicht durch die Führungsschiene nach Figur 1 mit eingesetzten vorkonfektionierten Prothesenzähnen,
Figur 3: eine schematische Aufsicht auf ein Teilstück der Führungsschiene nach den Figuren 1 und 2,
Figur 4: einen vorkonfektionierten Prothesenzahn in einer Halterung;
Figur 5: eine schematische perspektivische Querschnittansicht durch den Prothesenzahn und die Halterung nach Figur 4;
Figur 6: einen vorkonfektionierten Prothesenzahn;
Figur 7: zwei schematische Seitenansichten einer mit einem erfindungsgemäßen Verfahren hergestellten Führungsschiene, in der Fräsköpfe mit unterschiedlichen Durchmessern zur Umsetzung eines erfindungsgemäßen Verfahrens geführt werden;
Figur 8: eine schematische perspektivische Ansicht einer erfindungsgemäßen Dentalprothese, die mit einem erfindungsgemäßen Verfahren hergestellt wurde; und
Figur 9: den Ablauf eines erfindungsgemäßen Verfahrens zum Herstellen einer Führungsschiene.

In den Figuren werden teilweise die gleichen Bezugszeichen für die gleichen Teile in unterschiedlichen Ausführungen verwendet, um die Lesbarkeit und Vergleichbarkeit der Ausführungsbeispiele zu verbessern.

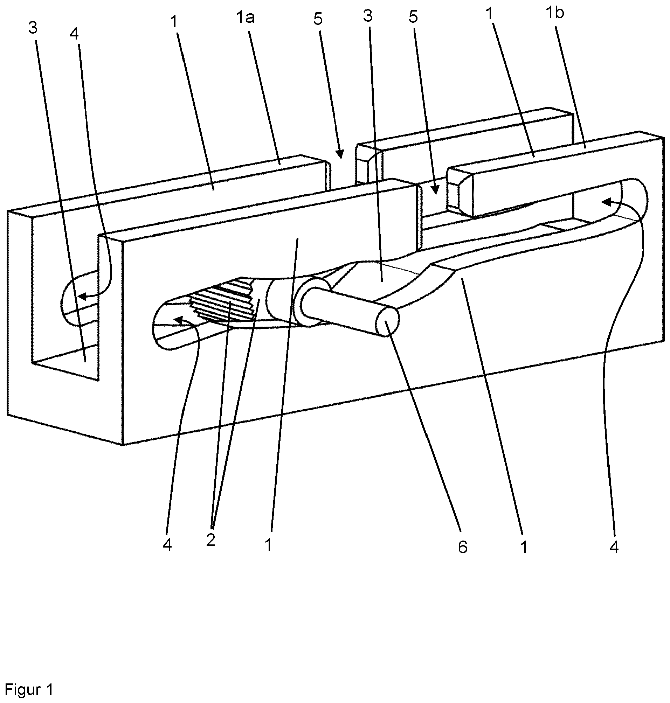

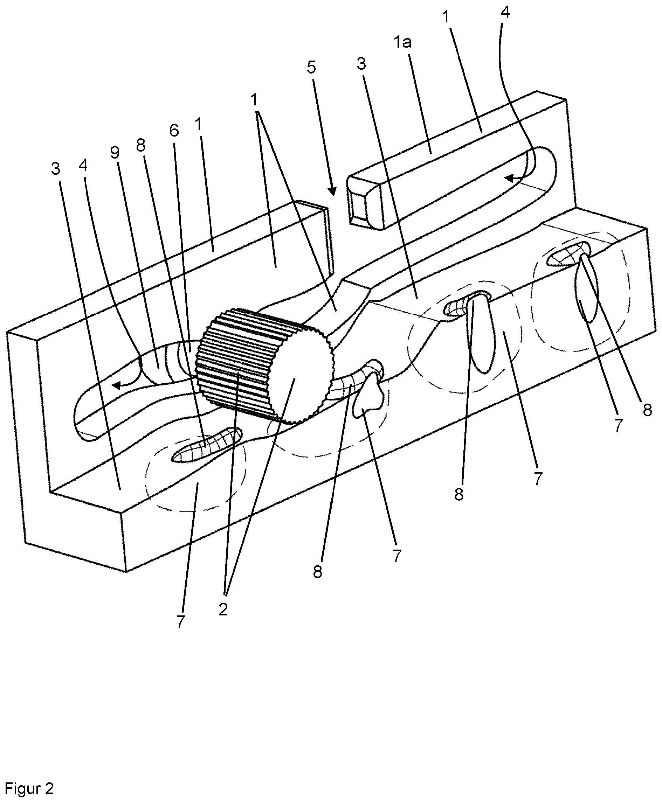

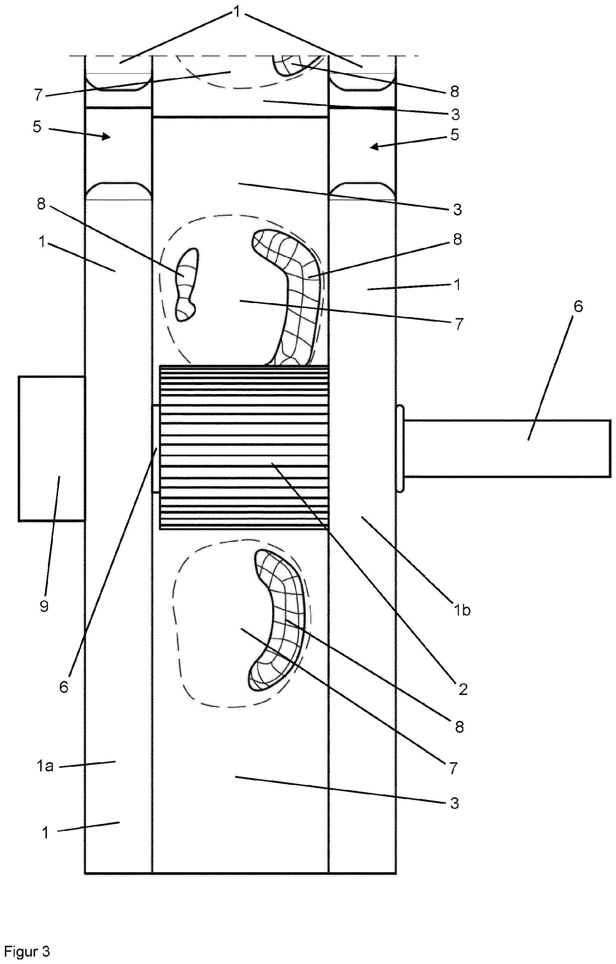

Die Figuren 1 bis 3 zeigen unterschiedliche Ansichten auf eine mit einem erfindungsgemäßen Verfahren hergestellte Führungsschiene 1. Die Führungsschiene 1 dient dazu, einen Fräskopf 2 zu führen. Die Führungsschiene 1 kann zweiteilig beziehungsweise mehrteilig aufgebaut sein. Beispielsweise kann die Führungsschiene 1 zwei seitliche Führungsschienenteile 1a, 1b aufweisen, die an einer Halterung 3 befestigt sind, die zwischen den Führungsschienenteilen 1a, 1b angeordnet ist. Die Führungsschienenteile 1a, 1b können einzeln oder auch zusammen miteinander oder auch zusammen mit der Halterung 3 gefertigt werden, beispielsweise mit einem generativen 3D-Druckverfahren.

In beiden Führungsschienenteilen 1a, 1b können Führungsbahnen 4 als Schlitze in der Führungsschiene 1 angeordnet sein. Die Führungsbahnen 4 haben in den Figuren 1 bis 3 die gleiche Form, so dass der Fräskopf 2 dazwischen ohne ein Verkippen der Drehachse des Fräskopfs 2 geführt wird. Es ist aber auch möglich, die Führungsbahnen 4 unterschiedlich und mit einer Änderung der Neigung der Drehachse des Fräskopfs 2 entlang der Führungsbahnen 4 zu gestalten.

Um das Werkzeug, das heißt den Fräskopf 2 zwischen die beiden Führungsschienenteile 1a, 1b einführen zu können, kann ein Schlitz 5 in jedem der Führungsschienenteile 1a, 1b vorgesehen sein, der mit den Führungsbahnen 4 verbunden sein kann.

Der Fräskopf 2 kann über eine Achse 6 angetrieben werden, die mit einem Motor (nicht gezeigt) verbunden sein kann. Der Fräskopf 2 kann mit der Achse 6 und dem Motor Teil eines üblichen Dremels oder eines vergleichbaren Werkzeugs sein. Antriebe für Bohrer, wie sie in Zahnarztpraxen oder Dentallaboren vorhanden sind, sind für diesen Zweck problemlos einsetzbar.

In der Halterung 3 können vorkonfektionierte Prothesenzähne 7 befestigt sein. Bevorzugt umschließt die Halterung 3 zur Fixierung der vorkonfektionierten Prothesenzähne 7 diese weitgehend. Bevorzugt kann jedoch vorgesehen sein, dass das basal von den vorkonfektionierten Prothesenzähnen 7 zu entfernende Volumen 8 aus der Halterung 3 hervorsteht, so wie das in den Figuren 1 bis 5 zu sehen ist. Die Halterung 3 ist bevorzugt mehrteilig ausgeführt, so dass die einzelnen Prothesenzähne 7 gut eingesetzt und nach der Bearbeitung auch wieder entnommen werden können. Es ist auch möglich, die Halterung 3 durch Eingießen der vorkonfektionierten Prothesenzähne 7 in ein Wachs einzubetten und dadurch die Halterung 3 einteilig auszuführen.

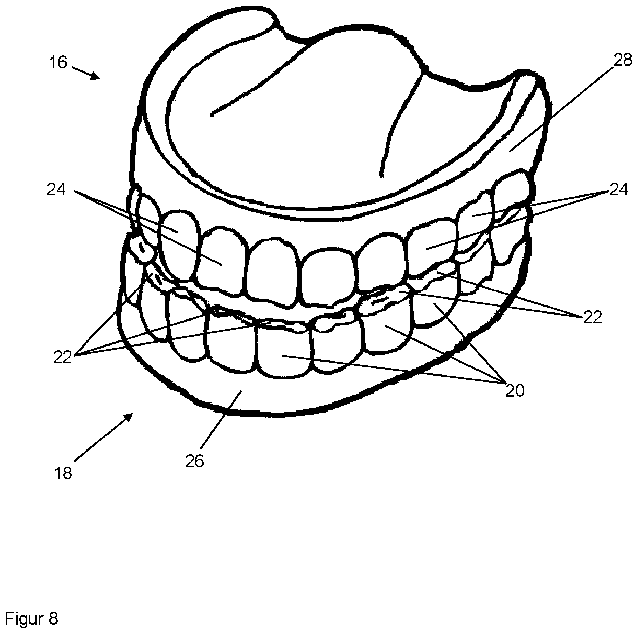

Die Form der Führungsschiene 1 und die Führungsbahnen 4 sind derart geformt und die Halterung 3 derart zu den Führungsbahnen 4 positioniert, dass ein Fräskopf 2 mit bekannten Abmessungen genau das zu entfernende Volumen 8 von vorkonfektionierten Prothesenzähnen 7 überfahren und damit entfernen kann. Um dies zu erreichen, kann bei dem Design der Führungsschiene 1 mit den Führungsbahnen 4 und gegebenenfalls beim Design der Halterung 3 auf Daten zurückgegriffen werden, die zur Modellierung der zu erzeugenden Dentalprothese 16, 18 (siehe Figur 8) verwendet werden. In diesen Daten steckt nämlich die Information, wie die vorkonfektionierten Prothesenzähne 7 gekürzt werden müssen, damit sie in der Prothesenbasis 26, 28 (siehe Figur 8) die richtige Position und Lage haben, so dass beim Patienten die gewünschte Okklusion, der gewünschte ästhetische Eindruck und die gewünschte Funktion der Dentalprothese 16, 18 erreicht wird. Durch die derart ausgeführte Führungsschiene 1 kann der Fräskopf 2 auf einfache Weise derart über die basalen Seiten der vorkonfektionierten Prothesenzähne 7 geführt werden, dass genau das zu entfernende Volumen 8 von den vorkonfektionierten Prothesenzähnen 7 entfernt wird.

Zur leichteren Führbarkeit des Fräskopfs 2 kann eine Scheibe 9 an einer Verlängerung des Fräskopfs 2 angeordnet sein, die ein Herausrutschen des Fräskopfs auf der Führungsbahn 4 verhindert. Hierzu muss die Scheibe 9 lediglich einen größeren Durchmesser als die Führungsbahn 4 haben.

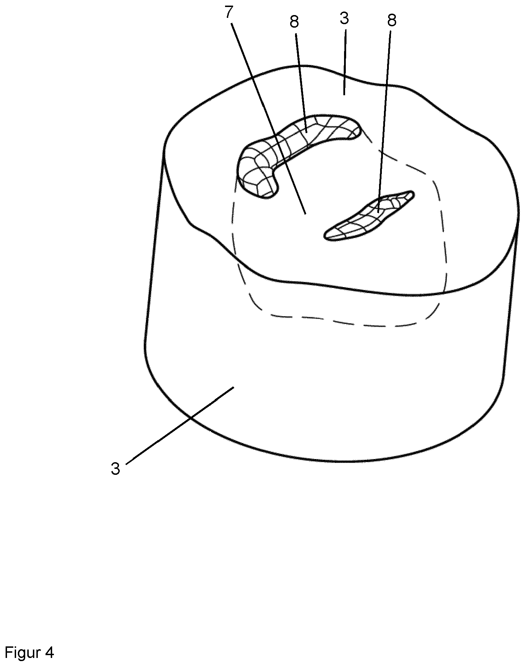

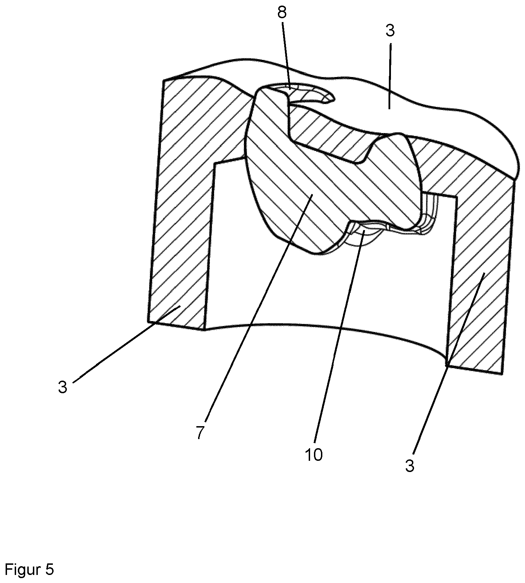

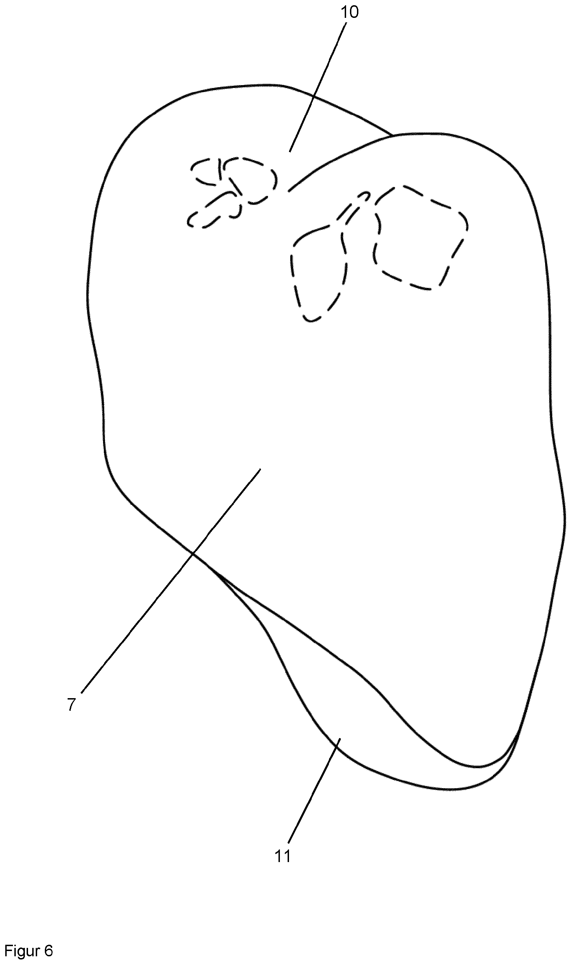

Die Figuren 4 und 5 zeigen einen Ausschnitt einer Halterung 3, in der ein vorkonfektionierter Prothesenzahn 7 gehalten wird. Die Figur 6 zeigt einen vorkonfektionierten Prothesenzahn 7 vor der Bearbeitung. Eine koronale Seite 10 des vorkonfektionierten Prothesenzahns 7 weist ins Innere der Halterung 3. Der vorkonfektionierte Prothesenzahn 7 kann derart in die Halterung 3 eingebettet sein, dass an seiner basalen Seite 11 genau das zu entfernende Volumen 8 übersteht. Die basale Seite 11 des vorkonfektionierten Prothesenzahns 7 ist der koronalen Seite 10 des vorkonfektionierten Prothesenzahns 7 gegenüberliegend angeordnet. Die Halterung 3 kann beispielsweise entlang der in Figur 5 gezeigten Schnittfläche teilbar sein, um den vorkonfektionierten Prothesenzahn 7 bequem in die Halterung 3 einsetzen zu können und nach der subtraktiven Bearbeitung auch bequem wieder entnehmen zu können. Während der subtraktiven Bearbeitung wird der vorkonfektionierte Prothesenzahn 7 stabil in der Halterung 3 gehalten.

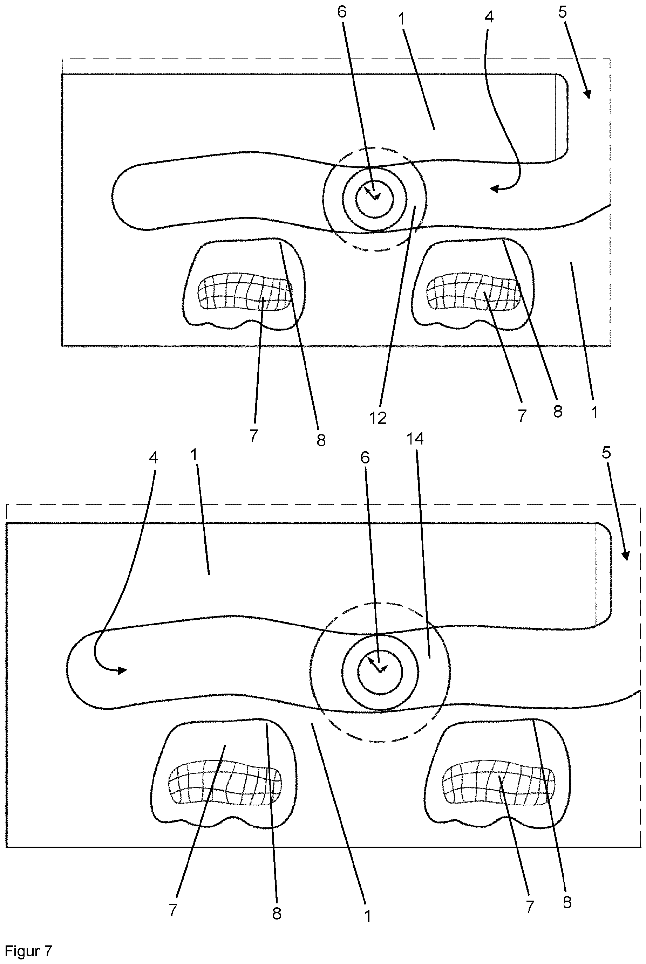

Figur 7 zeigt zwei schematische Seitenansichten von Ausschnitten einer mit einem erfindungsgemäßen Verfahren hergestellten Führungsschiene 1, in der Fräsköpfe 12, 14 mit unterschiedlichen Durchmessern zur Umsetzung eines erfindungsgemäßen Verfahrens geführt werden können. Die Führungsschiene 1 weist eine Führungsbahn 4 auf, in der die Fräsköpfe 12, 14 geführt über vorkonfektionierte Prothesenzähne 7 geführt werden können. Die Führungsschiene 1 ist transparent dargestellt, damit die Lage der vorkonfektionierten Prothesenzähne 7 erkennbar ist. Um die Fräsköpfe 12, 14 in die Führungsschiene 1 einführen zu können, kann die Führungsbahn 4 über einen Schlitz 5 von außen erreichbar sein. Die Fräsköpfe 12, 14 können wechselbar an einer angetriebenen Drehachse 6 befestigt beziehungsweise befestigbar sein.

Zunächst wird ein Fräskopf 12 mit einem kleinen Durchmesser verwendet (siehe Figur 7 oben). Dieser Fräskopf 12 wird entlang der Führungsbahn 4 über die vorkonfektionierten Prothesenzähne 7 geführt. Dabei wird ein basales Teilstück eines von den vorkonfektionierten Prothesenzähnen 7 zu entfernenden Volumens 8 entfernt. Anschließend wird ein Fräskopf 14 mit einem großen Durchmesser verwendet (siehe Figur 7 unten). Dieser Fräskopf 14 wird ebenfalls entlang der Führungsbahn 4 über die vorkonfektionierten Prothesenzähne 7 geführt. Dabei wird das restliche von den vorkonfektionierten Prothesenzähnen 7 zu entfernende Volumens 8 entfernt. Theoretisch könnte auch nur der Fräskopf 14 mit dem größeren Durchmesser verwendet werden. Die Zweiteilung des Verfahrens soll verhindern, dass der Widerstand gegen den Fräskopf 12, 14 zu groß wird und dass die vorkonfektionierten Prothesenzähne 7 zu großen mechanischen Belastungen ausgesetzt sind.

Da die Führungsschiene 1 mit einem generativen Verfahren, wie beispielsweise einem 3D-Drucker, hergestellt werden kann und das basale Kürzen der vorkonfektionierten Prothesenzähne 7 mit einem manuell gehaltenen Dremel oder manuell in der Führungsschiene 1 geführten Fräskopf 2 oder einem anderen Schneidwerkzeug (nicht gezeigt) durch Führen in der Führungsschiene vorgenommen werden kann, ist zur Umsetzung der erfindungsgemäßen Verfahren keine computergesteuerte Fräse notwendig. Dadurch kann ein gegebenenfalls bereits ohnehin vorhandener 3D-Drucker oder eine vorhandene andere Vorrichtung zum generativen Herstellen der Führungsschiene 1 und wenn gewünscht auch der Halterung 2 verwendet werden, so dass die erfindungsgemäßen Verfahren ausgeführt werden können, ohne dass die Anschaffung einer teuren computergesteuerten Fräse notwendig wäre.

Figur 8 zeigt eine Dentalprothese 16 für einen Oberkiefer und eine Dentalprothese 18 für einen Unterkiefer, die mit einem erfindungsgemäßen Verfahren hergestellt wurde. Hierzu wurden die in die Dentalprothesen 16, 18 eingesetzten Prothesenzähne 20, 24 basal mit Hilfe einer Führungsschiene 1 bearbeitet, wie sie in den Figuren 1 bis 3 und 7 gezeigt ist. Die koronale Seite 22 der Prothesenzähne 20 für den Unterkiefer ist in Figur 8 erkennbar. Anschließend können die basal subtraktiv bearbeiteten Prothesenzähne 20 in eine Prothesenbasis 26 für den Unterkiefer und die basal subtraktiv bearbeiteten Prothesenzähne 24 in eine Prothesenbasis 28 für den Oberkiefer eingeklebt werden. Die Prothesenbasen 26, 28 können mit einem generativen oder subtraktiven CAM-Verfahren anhand eines vorhandenen virtuellen und mit einem CAD-Verfahren generierten Modells erzeugt werden, so dass die Prothesenbasen 26, 28 genau zu den mit Hilfe der Führungsschiene 1 bearbeiteten Prothesenzähnen 22, 24 passen.

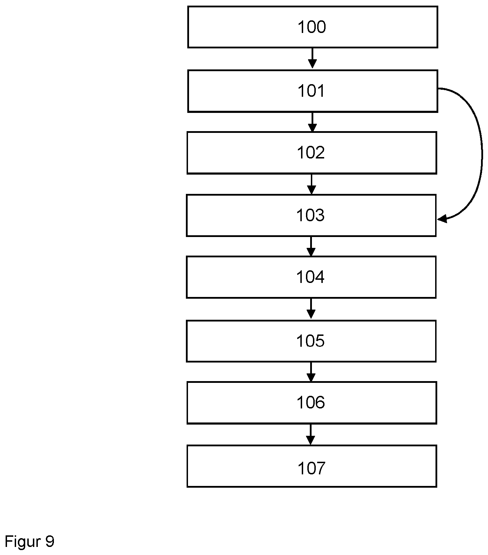

Figur 9 zeigt den Ablauf eines erfindungsgemäßen Verfahrens, das im Folgenden anhand der Figuren 1 bis 8 erläutert wird.

In einem ersten Arbeitsschritt 100 kann ein Einlesen vorhandener CAD-Daten zur gewünschten Form der bearbeiteten Prothesenzähne 22, 24 oder des zu entfernenden Volumens 8 von den vorkonfektionierten Prothesenzähnen 7 erfolgen. Die Daten können in einem elektronischen Speicher gespeichert werden. Hierzu kann eine Datenschnittstelle (nicht gezeigt) vorhanden sein, über die die CAD-Daten eingelesen werden. Alternativ können die Berechnungen der zu entfernenden Volumina 8 auch als Teil des erfindungsgemäßen Verfahrens berechnet werden.

Aus den eingelesenen CAD-Daten können in einem zweiten Arbeitsschritt 101 eine oder mehrere (auch unterschiedliche) virtuelle Formen von Führungsbahnen 4 berechnet werden. Hierzu kann ein Berechnungsmodul verwendet werden. Dabei können die Orientierung(en) und die Position(en) des zumindest einen vorkonfektionierten Prothesenzahns 7 in Bezug auf das von dem jeweiligen vorkonfektionierten Prothesenzahns 7 zu entfernende Volumen 8 in der Halterung 3 berücksichtigt werden. Die Führungsbahn 4 oder die Führungsbahnen 4 werden dabei so geformt, dass ein Fräskopf 2, 12, 14 mit bekanntem Durchmesser oder ein Schneidwerkzeug zum subtraktiven Bearbeiten von Prothesenzähnen 7 bei einem Führen in der Führungsschiene 1 so über die basalen Seiten des zumindest einen vorkonfektionierten Prothesenzahns 7 gefahren wird, dass das zu entfernende Volumen 8 von dem zumindest einen vorkonfektionierten Prothesenzahn 7 subtraktiv entfernt wird. Zur Berechnung der Führungsbahn 4 oder der Führungsbahnen 4 kann ein Bewegungsablauf des Fräskopfs 2 relativ zu dem zumindest einen positionsfesten vorkonfektionierten Prothesenzahn 7 simuliert oder vorausberechnet werden.

In einem optionalen dritten Arbeitsschritt 102 kann analog der Führungsschiene 1 auch ein virtuelles Modell der Halterung 3 berechnet werden. Bevorzugt werden die virtuellen Modelle des zweiten Arbeitsschritts 101 und des dritten Arbeitsschritte 102 aufeinander abgestimmt. Es kann vorgesehen sein, dass die Modellierung der an der Führungsschiene 1 zu befestigenden Halterung 3 derart erfolgt, dass die Drehachse des Fräskopfs 2, der in der Führungsschiene 1 zu führen ist, nicht geneigt wird, wenn der Fräskopf 2 entlang der Führungsbahn(en) 4 mit der Führungsschiene 1 geführt wird.

Nach dem dritten Arbeitsschritt 102 oder dem zweiten Arbeitsschritt 101 kann ein vierter Arbeitsschritt 103 erfolgen, in dem die Führungsschiene 1 mit einem CAM-Verfahren hergestellt wird. Als CAM-Verfahren wird bevorzugt ein generatives CAM-Verfahren angewendet, besonders bevorzugt ein 3D-Druckverfahren. Optional kann im vierten Arbeitsschritt 103 auch die Halterung 3 hergestellt werden. Ebenfalls optional kann in dem vierten Arbeitsschritt 103 auch eine Prothesenbasis 26, 28 hergestellt werden.

Das erfindungsgemäße Verfahren zur Herstellung der Führungsschiene 1 ist danach abgeschlossen. In weiteren Arbeitsschritten kann die Führungsschiene dann verwendet werden, um eine erfindungsgemäße Dentalprothese 16, 18 herzustellen.

In einem fünften Arbeitsschritt 104 werden der zumindest eine Prothesenzahn 7 in der Halterung 3 fixiert und die Führungsschiene 1 an der Halterung 3 fixiert.

In einem sechsten Arbeitsschritt 105 werden von dem zumindest einen vorkonfektionierten Prothesenzahn 7 das zu entfernende Volumen 8 beziehungsweise die zu entfernenden Volumina 8 entfernt, indem der Fräskopf 2 oder die Fräsköpfe 12, 14 und/oder das zumindest ein Schneidwerkzeug entlang der Führungsbahn 4 über die basalen Seiten 11 des zumindest einen vorkonfektionierten Prothesenzahns 7 geführt werden.

In einem siebten Arbeitsschritt 106 wird der zumindest eine basal gekürzte beziehungsweise bearbeitete Prothesenzahn aus der Halterung 3 entfernt und gegebenenfalls gereinigt.

In einem achten Arbeitsschritt 107 wird der zumindest eine bearbeitete Prothesenzahn 20, 24 in einem passenden Zahnfach der Prothesenbasis 26, 28 verbunden. Gegebenenfalls kann die so hergestellte Dentalprothese 16, 18 anschließend gereinigt werden.

### Bezugszeichenliste

- 1: Führungsschiene
- 1a, 1b: Führungsschienenteil
- 2: Fräskopf
- 3: Halterung
- 4: Führungsbahn
- 5: Schlitz
- 6: Achse
- 7: Vorkonfektionierter Prothesenzahn
- 8: Zu entfernendes Volumen
- 9: Scheibe
- 10: Koronale Seite
- 11: Basale Seite
- 12: Fräskopf mit kleinem Durchmesser
- 14: Fräskopf mit großem Durchmesser
- 16: Dentalprothese für Oberkiefer
- 18: Dentalprothese für Unterkiefer
- 20: Prothesenzahn
- 22: Koronale Seite
- 24: Prothesenzahn
- 26: Prothesenbasis für Unterkiefer
- 28: Prothesenbasis für Oberkiefer
- 100: Erster Arbeitsschritt
- 101: Zweiter Arbeitsschritt
- 102: Dritter Arbeitsschritt (Optional)
- 103: Vierter Arbeitsschritt
- 104: Fünfter Arbeitsschritt
- 105: Sechster Arbeitsschritt
- 106: Siebter Arbeitsschritt
- 107: Achter Arbeitsschritt

## Patentansprüche

1. Verfahren zum Herstellen einer Führungsschiene (1), die zum Führen eines beweglichen Fräskopfs (2, 12, 14) oder eines Schneidwerkzeugs bei der Bearbeitung von vorkonfektionierten Prothesenzähnen (7) vorgesehen ist, wobei das Verfahren durch die folgenden Schritte gekennzeichnet ist:
A) Erzeugen oder Bereitstellen eines virtuellen 3D-Modells einer Dentalprothese (16, 18) mit einem virtuellen Modell einer Prothesenbasis (26, 28) als Zahnfleischimitat und mit zumindest einem virtuellen Modell von zumindest einem in der Prothesenbasis (26, 28) anzuordnenden bearbeiteten Prothesenzahn (20, 24) zur Nachbildung zumindest eines Zahns;
B) Berechnen eines von zumindest einem vorkonfektionierten Prothesenzahn (7) zu entfernenden Volumens (8) durch Vergleichen des zumindest einen virtuellen Modells des zumindest einen bearbeiteten Prothesenzahns (20, 24) mit zumindest einem virtuellen Modell des zumindest einen vorkonfektionierten Prothesenzahns (7) mit Hilfe eines CAD-Verfahrens;
C) Erzeugen eines virtuellen Modells einer Führungsschiene (1) mit einem CAD-Verfahren, die an einer Halterung (3) zur Befestigung des zumindest einen vorkonfektionierten Prothesenzahns (7) fixiert oder fixierbar ist, wobei die Führungsschiene (1) derart modelliert wird und die Halterung (3) relativ zu der Führungsschiene (1) derart positioniert wird und der zumindest eine vorkonfektionierte Prothesenzahn (7) in der Halterung (3) derart ausgerichtet befestigt wird, dass die Führungsschiene (1) ein Führen zumindest eines Fräskopfs (2, 12, 14) und/oder zumindest eines Schneidwerkzeugs mit bekannten Abmessungen ermöglicht, so dass mit dem zumindest einen Fräskopf (2, 12, 14) das von dem zumindest einen vorkonfektionierten Prothesenzahn (7) zu entfernende Volumen (8) überfahren wird und/oder mit dem zumindest einen Schneidwerkzeug das von dem zumindest einen vorkonfektionierten Prothesenzahn (7) zu entfernende Volumen (8) abgeschnitten wird; und
D) Herstellen einer physischen Führungsschiene (1) auf Basis des virtuellen Modells der Führungsschiene (1) mit einem CAM-Verfahren.

2. Verfahren nach Anspruch 1, **dadurch gekennzeichnet, dass**
die Führungsschiene (1) ein Führen des zumindest einen Fräskopfs (2, 12, 14) und/oder des zumindest einen Schneidwerkzeugs entlang einer Linie oder entlang einer Fläche im Raum ermöglicht oder erzwingt.

3. Verfahren nach einem der Ansprüche 1 oder 2, **dadurch gekennzeichnet, dass** in Schritt C) ein Erzeugen eines virtuellen Modells der Halterung (3) mit einem CAD-Verfahren erfolgt und in Schritt D) eine Herstellung einer physischen Halterung (3) anhand des virtuellen Modells der Halterung (3) mit einem CAM-Verfahren erfolgt.

4. Verfahren nach Anspruch 3, **dadurch gekennzeichnet, dass**
die Halterung (3) derart modelliert wird, dass das zu entfernende Volumen (8) des zumindest einen vorkonfektionierten Prothesenzahns (7) aus der Halterung (3) vorsteht, bevorzugt nur das zu entfernende Volumen (8) des zumindest einen vorkonfektionierten Prothesenzahns (7) aus der Halterung (3) vorsteht und besonders bevorzugt die Halterung (3) an allen angrenzenden Oberflächen des zu entfernenden Volumens (8) an dem zumindest einen vorkonfektionierten Prothesenzahn (7) anliegt.

5. Verfahren nach einem der vorangehenden Ansprüche, **dadurch gekennzeichnet, dass** in Schritt C) an dem virtuellen Modell der Führungsschiene (1) oder an einem virtuellen Modell der Halterung (3) oder an den virtuellen Modellen der Führungsschiene (1) und der Halterung (3) Befestigungselemente modelliert werden, mit denen die Führungsschiene (1) und die Halterung (3) aneinander in einer eindeutigen Position und Ausrichtung fixierbar sind, wobei bevorzugt nach Schritt D) die physische Führungsschiene (1) und die physische Halterung (3) über die Befestigungselemente aneinander fixiert werden.

6. Verfahren nach einem der vorangehenden Ansprüche, **dadurch gekennzeichnet, dass** in Schritt B) zumindest eine Grenzlinie auf der Oberfläche des zumindest einen virtuellen Modells des vorkonfektionierten Prothesenzahns (7) berechnet wird, die das zu entfernende Volumen (8) begrenzt.

7. Verfahren nach Anspruch 6, **dadurch gekennzeichnet, dass**
in Schritt C) ein Erzeugen zumindest eines virtuellen Modells zumindest einer Schablone als die Halterung (3) der Führungsschiene (1) erfolgt, wobei die zumindest eine Schablone eine innere Oberfläche aufweist, wobei die innere Oberfläche bereichsweise einer Negativform des zumindest einen vorkonfektionierten Prothesenzahns (7) entspricht, wobei die zumindest eine Schablone im zumindest einen virtuellen Modell wenigstens eine Öffnung aufweist, die durch die zumindest eine Grenzlinie begrenzt wird, und wobei die Oberflächen des zumindest einen virtuellen Modells der zumindest einen Schablone derart geformt werden, dass das zumindest eine virtuelle Modell des zumindest einen vorkonfektionierten Prothesenzahns (7) ohne Überlappung in das zumindest eine virtuelle Modell der zumindest einen Schablone einsetzbar ist und
in Schritt D) ein Herstellen zumindest einer physischen Schablone als Halterung (3) der Führungsschiene (1) auf Basis des zumindest einen virtuellen Modells der zumindest einen Schablone mit einem CAM-Verfahren erfolgt.

8. Verfahren nach einem der vorangehenden Ansprüche, **dadurch gekennzeichnet, dass** die Führungsschiene (1) derart modelliert wird, dass sich die Ausrichtung der Drehachse des zumindest einen Fräskopfs (2, 12, 14) und/oder die Lage einer Schneide des zumindest einen Schneidwerkzeugs beim Führen in der Führungsschiene (1) nicht ändert und nur ein translatorisches Verschieben der Drehachse oder der Lage der Schneide erfolgt, wobei bevorzugt die Halterung (3) passend modelliert wird und/oder die Befestigung der Halterung (3) an der Führungsschiene (1) passend modelliert wird.

9. Verfahren nach einem der vorangehenden Ansprüche, **dadurch gekennzeichnet, dass** das virtuelle Modell der Führungsschiene (1) mit zwei einander gegenüberliegenden Führungsschienenteilen (1a, 1b) erzeugt wird, wobei die Halterung (3) zur Befestigung des zumindest einen vorkonfektionierten Prothesenzahns (7) zwischen den Führungsschienenteilen (1a, 1b) angeordnet wird und der zumindest eine Fräskopf (2, 12, 14) und/oder das zumindest eine Schneidwerkzeug zwischen den Führungsschienenteilen (1a, 1b) geführt wird, wobei vorzugsweise die beiden Führungsschienenteile (1a, 1b) die gleichen Führungsbahnen (4) zum Führen des zumindest einen Fräskopfs (2, 12, 14) und/oder des zumindest einen Schneidwerkzeugs aufweisen.

10. Verfahren nach einem der vorangehenden Ansprüche, **dadurch gekennzeichnet, dass** die Halterung (3) eine mehrteilige Halterung ist, in der der zumindest eine vorkonfektionierte Prothesenzahn (7) lösbar zu befestigen ist, wobei vorzugsweise die Teile der mehrteiligen Halterung lösbar aneinander zu befestigen sind.

11. Verfahren nach einem der vorangehenden Ansprüche, **dadurch gekennzeichnet, dass** das zumindest eine virtuelle Modell von zumindest dem in der Prothesenbasis (26, 28) anzuordnenden bearbeiteten Prothesenzahn (20, 24) in Schritt A) derart erzeugt wird, dass die basale Oberfläche des zumindest einen virtuellen Modells des zumindest einen bearbeiteten Prothesenzahns (20, 24) durch zumindest einen sich um seine Drehachse drehenden und entlang einer Linie geführten Fräskopf (2, 12, 14) mit bekannter rotationssymmetrischer Form zu formen ist.

12. Verfahren zum basalen Kürzen von Prothesenzähnen (7) zur Herstellung einer Dentalprothese (16, 18) aufweisend ein Verfahren nach einem der vorangehenden Ansprüche, wobei nach Schritt D) zumindest ein vorkonfektionierter Prothesenzahn (7), der in der Halterung (3) befestigt ist oder wird, basal mit dem zumindest einen Fräskopf (2, 12, 14) und/oder dem zumindest einen Schneidwerkzeus bearbeitet wird, wobei der zumindest eine Fräskopf (2, 12, 14) und/oder das zumindest eine Schneidwerkzeug mit der physischen Führungsschiene (1) geführt wird, wobei dabei das zu entfernende Volumen (8) des zumindest einen vorkonfektionierten Prothesenzahns (7) abgefräst wird, wobei vorzugsweise der zumindest eine Fräskopf (2, 12, 14) und/oder das zumindest eine Schneidwerkzeug manuell in der physischen Führungsschiene (1) geführt wird.

13. Verfahren nach Anspruch 12, **dadurch gekennzeichnet, dass**
bei dem Verfahren mehrere Fräsköpfe (2, 12, 14) mit unterschiedlichem Durchmesser der Fräsköpfe (2, 12, 14) verwendet werden, wobei die Fräsköpfe (2, 12, 14) mit steigendem Durchmesser nacheinander in der physischen Führungsschiene (1) geführt werden und/oder
bei dem Verfahren mehrere Schneidwerkzeuge mit unterschiedlichen Schneidebenen verwendet werden, wobei Schneiden mit Schneidebenen geführt werden, die nacheinander immer tiefer in die basalen Seiten (11) der Prothesenzähne (7) schneiden.

14. Verfahren zum Herstellen einer Dentalprothese (16, 18) aufweisend ein Verfahren zum basalen Kürzen von Prothesenzähnen (7) nach einem der Ansprüche 12 oder 13, wobei nach dem basalen Kürzen des zumindest einen vorkonfektionierten Prothesenzahns (7) der zumindest eine bearbeitete Prothesenzahn (20, 24) in einer Prothesenbasis (26, 28) als Zahnfleischimitat befestigt wird, insbesondere eingeklebt wird und
die Prothesenbasis (26, 28) mit Hilfe eines CAM-Verfahrens anhand des virtuellen Modells der Prothesenbasis (26, 28) nach Schritt A) erzeugt wird.

15. Vorrichtung zum Umsetzen eines Verfahrens nach einem der Ansprüche 1 bis 14, wobei die Vorrichtung ein Berechnungsmodul zur Modellierung einer virtuellen Form der Führungsschiene (1) aus den Daten von einem von vorkonfektionierten Prothesenzähnen (7) zu entfernenden Volumen (8) gemäß Verfahrensschritt C) aufweist und eine CAM-Vorrichtung, insbesondere einen 3D-Drucker, zum Herstellen der Führungsschiene (1) umfasst oder mit einer solchen CAM-Vorrichtung über eine Schnittstelle der Vorrichtung zur Umsetzung des Verfahrensschritts D) verbunden oder verbindbar ist.

## Claims

1. A method for producing a guide rail (1) which is provided for guiding a mobile milling head (2, 12, 14) or cutting tool during the machining of prefabricated prosthetic teeth (7), wherein the method is **characterized by** the following steps:
A) Generating or Providing a virtual 3D model of a dental prosthesis (16, 18) with a virtual model of a prosthesis base (26, 28) as a gum imitation and with at least one virtual model of at least one machined prosthetic tooth (20, 24) to be arranged in the prosthesis base (26, 28) to reproduce at least one tooth;
B) Calculating a volume to be removed from at least one prefabricated prosthetic tooth (7) by comparing the at least one virtual model of the at least one machined prosthetic tooth (20, 24) with at least one virtual model of the at least one prefabricated prosthetic tooth (7) using a CAD method;
C) Generating a virtual model of a guide rail (1) using a CAD method, which guide rail (1) is fixed or fixable to a mount (3) for fastening the at least one prefabricated prosthetic tooth (7), wherein the guide rail (1) is modeled such and the mount (3) is positioned relative to the guide rail (1) such and the at least one prefabricated prosthetic tooth (7) is fastened in the mount (3) in an orientation such that the guide rail (1) enables guidance of at least one milling head (2, 12, 14) and/or at least one cutting tool of known dimensions, in such a manner that the volume (8) to be removed from the at least one prefabricated prosthetic tooth (7) is traversed with the at least one milling head (2, 12, 14) and/or the volume (8) to be removed from the at least one prefabricated prosthetic tooth (7) is cut away with the at least one cutting tool; and
D) Producing a physical guide rail (1) on the basis of the virtual model of the guide rail (1) using a CAM method.

2. The method according to Claim 1, **characterized in that**
the guide rail (1) enables or compels guidance of the at least one milling head (2, 12, 14) and/or at least one cutting tool along a line or along a spatial area.

3. The method according to any one of Claims 1 or 2, **characterized in that** in step C) a virtual model of the mount (3) is generated using a CAD method and in step D) a physical mount (3) is produced on the basis of the virtual model of the mount (3) using a CAM method.

4. The method according to Claim 3, **characterized in that**
the mount (3) is modeled such that the volume (8) to be removed of the at least one prefabricated prosthetic tooth (7) projects out from the mount (3), preferably only the volume (8) to be removed of the at least one prefabricated prosthetic tooth (7) projects out from the mount (3) and particular preferably the mount (3) abuts the at least one prefabricated prosthetic tooth (7) at all adjoining surfaces of the volume (8) to be removed.

5. The method according to any one of the preceding Claims, **characterized in that** in step C) fastening elements are modeled on the virtual model of the guide rail (1) or on a virtual model of the mount (3) or on the virtual models of the guide rail (1) and the mount (3) by means which the guide rail (1) and the mount (3) are fixable relative to one another in a unique position and orientation, wherein preferably after step D) the physical guide rail (1) and the physical mount (3) are fixed to one another via the fastening elements.

6. The method according to any one of the preceding Claims, **characterized in that** in step B) at least one boundary line which delimits the volume (8) to be removed is calculated on the surface of the at least one virtual model of the prefabricated prosthetic tooth (7).

7. The method according to Claim 6, **characterized in that**
in step C) at least one virtual model of at least one jig is generated as the mount (3) of the guide rail (1), wherein the at least one jig has an inner surface, wherein the inner surface corresponds in places to a negative mold of the at least one prefabricated prosthetic tooth (7), wherein the at least one jig has at least one opening in the at least one virtual model, which opening is delimited by the at least one boundary line, and wherein the surfaces of the at least one virtual model of the at least one jig are shaped such that the at least one virtual model of the at least one prefabricated prosthetic tooth (7) is insertable without overlap into the at least one virtual model of the at least one jig and
in step D) at least one physical jig is produced as a mount (3) of the guide rail (1) on the basis of the at least one virtual model of the at least one jig using a CAM method.

8. The method according to any one of the preceding Claims, **characterized in that** the guide rail (1) is modeled such that the orientation of a pivot shaft of the at least one milling head (2, 12, 14) and/or a location of a cutting edge of the at least one cutting tool does not change during guidance in the guide rail (1) and the pivot shaft or the location of the cutting edge is only translationally displaced, wherein preferably during modeling of the guide rail (1) the mount (3) is modeled to fit or the fastening of the mount (3) on the guide rail (1) is modeled to fit or the mount (3) is modeled to fit and the fastening of the mount (3) on the guide rail (1) is modeled to fit.

9. The method according to any one of the preceding Claims, **characterized in that** the virtual model of the guide rail (1) is generated with two mutually opposing guide rail parts (1a, 1b), wherein the mount (3) for fastening the at least one prefabricated prosthetic tooth (7) is arranged between the guide rail parts (1a, 1b) and the at least one milling head (2, 12, 14) or the at least one cutting tool or the at least one milling head (2, 12, 14) and the at least one cutting tool is guided between the guide rail parts (1a, 1b), wherein preferably the two guide rail parts (1a, 1b) have identical guideways (4) for guiding the at least one milling head (2, 12, 14) or the at least one cutting tool or the at least one milling head (2, 12, 14) and the at least one cutting tool.

10. The method according to any one of the preceding Claims, **characterized in that** the mount (3) is a multipart mount in which the at least one prefabricated prosthetic tooth (7) is detachably fastenable, wherein preferably the parts of the multipart mount are detachably fastenable to one another.

11. The method according to any one of the preceding Claims, **characterized in that** the at least one virtual model of at least the machined prosthetic tooth (20, 24) to be arranged in the prosthesis base (26, 28) is generated in step A) such that the basal surface of the at least one virtual model of the at least one machined prosthetic tooth (20, 24) is shapeable by at least one milling head (2, 12, 14) of a known rotationally symmetrical shape which rotates about a pivot shaft thereof and is guided along a line.

12. A method for basally shortening prosthetic teeth (7) for producing a dental prosthesis (16, 18) including a method according to any one of the preceding claims, wherein after step D) at least one prefabricated prosthetic tooth (7) which is or has been fastened in the mount (3) is basally machined with the at least one milling head (2, 12, 14) and/or the at least one cutting tool, wherein the at least one milling head (2, 12, 14) and/or the at least one cutting tool is guided with the physical guide rail (1), wherein in so doing the volume (8) to be removed of the at least one prefabricated prosthetic tooth (7) is milled away, wherein preferably the at least one milling head (2, 12, 14) and/or the at least one cutting tool is guided manually in the physical guide rail (1).

13. The method according to Claim 12, **characterized in that**
a plurality of milling heads (2, 12, 14) having different milling head diameters are used in the method, wherein the milling heads (2, 12, 14) of increasing diameter are guided in succession in the physical guide rail (1), and/or
a plurality of cutting tools with different cutting planes are used in the method, wherein the guided cutting edges have cutting planes which cut successively progressively deeper into the basal sides (11) of the prosthetic teeth (7).

14. A method for producing a dental prosthesis (16, 18) including a method for basally shortening prosthetic teeth (7) according to any one of claims 12 or 13, wherein, after basal shortening of the at least one prefabricated prosthetic tooth (7), the at least one machined prosthetic tooth (20, 24) is fastened, or adhesively bonded, in a prosthesis base (26, 28) as a gum imitation and
the prosthesis base (26, 28) is produced by means of a CAM method on the basis of the virtual model of the prosthesis base (26, 28) according to step A).

15. An apparatus for implementing a method according to any one of Claims 1 to 14, wherein the apparatus has a calculation module for modeling a virtual shape of the guide rail (1) from the data of a volume (8) to be removed from prefabricated prosthetic teeth (7) according to method step C) and the apparatus comprises a CAM apparatus for producing the guide rail (1) or a 3D printer for producing the guide rail (1) or is connected or connectable to such a CAM apparatus or such a 3D printer via an interface of the apparatus for implementing method step D).

## Revendications

1. Procédé de fabrication d'un rail de guidage (1) qui est prévu pour le guidage d'une tête de fraisage (2, 12, 14) mobile ou d'un outil de découpe lors du façonnage de dents prothétiques préconfectionnées (7), le procédé étant **caractérisé par** les étapes suivantes :
A) création ou mise au point d'un modèle 3D virtuel d'une prothèse dentaire (16, 18) avec un modèle virtuel d'une base de prothèse (26, 28) servant d'imitation de la gencive et avec au moins un modèle virtuel d'au moins une dent prothétique (20, 24) façonnée à disposer dans la base de prothèse (26, 28) pour la reproduction d'au moins une dent ;
B) calcul d'un volume (8) à enlever d'au moins une dent prothétique préconfectionnée (7) par comparaison de l'au moins un modèle virtuel de l'au moins une dent prothétique (20, 24) façonnée avec un modèle virtuel de l'au moins une dent prothétique préconfectionnée (7) à l'aide d'un procédé CAO ;
C) création d'un modèle virtuel d'un rail de guidage (1) avec un procédé CAO, qui est fixé ou peut être fixé sur un support (3) permettant la fixation de l'au moins une dent prothétique préconfectionnée (7), où le rail de guidage (1) est modélisé de telle manière, et où le support (3) est positionné par rapport au rail de guidage (1) de telle manière, et l'au moins une dent prothétique préconfectionnée (7) est fixée dans le support (3) de telle manière, que le rail de guidage (1) permet un guidage d'une tête de fraisage (2, 12, 14) et/ou d'au moins un outil de découpe avec des dimensions connues, de sorte qu'à l'aide de l'au moins une tête de fraisage (2, 12, 14), le volume (8) à enlever est écrasé, et/ou le volume (8) à enlever de l'au moins une dent prothétique préconfectionnée (7) est coupé avec l'au moins un outil de découpe ; et
D) fabrication d'un rail de guidage (1) physique sur la base du modèle virtuel du rail de guidage (1) avec un procédé CAM.

2. Procédé selon la revendication 1, **caractérisé en ce que**
le rail de guidage (1) permet ou provoque un guidage de l'au moins une tête de fraisage (2, 12, 14) et/ou de l'au moins un outil de découpe le long d'une ligne ou le long d'une surface dans l'espace.

3. Procédé selon l'une des revendications 1 ou 2, **caractérisé en ce que**
dans l'étape C), il y a une création d'un modèle virtuel du support (3) avec un procédé CAO et dans l'étape D), il y une fabrication d'un support (3) physique à l'aide du modèle virtuel du support (3) avec un procédé CAM.

4. Procédé selon la revendication 3, **caractérisé en ce que**
le support (3) est modélisé de telle manière que le volume (8) à enlever de l'au moins une dent prothétique préconfectionnée (7) dépasse du support (3), de préférence, uniquement le volume (8) à enlever de l'au moins une dent prothétique préconfectionnée (7) dépasse du support (3) et de manière particulièrement préférée, le support (3) est adjacent à toutes les surfaces limitrophes du volume (8) à enlever sur l'au moins une dent prothétique préconfectionnée (7).

5. Procédé selon l'une des revendications précédentes, **caractérisé en ce que**
dans l'étape C), des éléments de fixation sont modélisés sur le modèle virtuel du rail de guidage (1) ou sur un modèle virtuel du support (3) ou sur les modèles virtuels du rail de guidage (1) et du support (3), éléments avec lesquels le rail de guidage (1) et le support (3) peuvent être fixés l'un à l'autre dans une position et une orientation précises, où, de préférence après l'étape D), le rail de guidage (1) physique et le support (3) physique sont fixés l'un à l'autre par le biais des éléments de fixation.

6. Procédé selon l'une des revendications précédentes, **caractérisé en ce que**
dans l'étape B), au moins une ligne limitrophe sur la surface de l'au moins un modèle virtuel de la dent prothétique préconfectionnée (7) qui délimite le volume (8) à enlever est calculée.

7. Procédé selon la revendication 6, **caractérisé en ce que**
dans l'étape C), il y a création d'au moins un modèle virtuel d'au moins gabarit servant de support (3) du rail de guidage (1), où l'au moins un gabarit présente une surface intérieure, où la surface intérieure correspond par endroits à une forme négative de l'au moins une dent prothétique préconfectionnée (7), où l'au moins un gabarit présente au moins un orifice dans l'au moins un modèle virtuel, qui est délimité par l'au moins une ligne limitrophe, et où les surfaces de l'au moins un modèle virtuel de l'au moins un gabarit sont formées de telle manière que l'au moins un modèle virtuel de l'au moins une dent prothétique préconfectionnée (7) peut être inséré dans l'au moins un modèle virtuel de l'au moins un gabarit sans superposition, et
dans l'étape D), il y fabrication d'au moins un gabarit physique servant de support (3) du rail de guidage (1) sur la base de l'au moins un modèle virtuel de l'au moins un gabarit avec un procédé CAM.

8. Procédé selon l'une des revendications précédentes, **caractérisé en ce que** le rail de guidage (1) est modélisé de telle manière que l'orientation de l'axe de rotation de l'au moins une tête de fraisage (2, 12, 14) et/ou la position d'un outil coupant de l'au moins un outil de découpe ne se modifient pas lors du guidage dans le rail de guidage (1) et qu'il y a uniquement un décalage par translation de l'axe de rotation ou de la position de l'outil coupant, où, de préférence, le support (3) est modélisé pour être adapté et/ou la fixation du support (3) sur le rail de guidage (1) est modélisée de manière adaptée.

9. Procédé selon l'une des revendications précédentes, **caractérisé en ce que** le modèle virtuel du rail de guidage (1) est créé avec deux parties de rail de guidage (1a, 1b) situées l'une en face de l'autre, où le support (3) est disposé entre les parties de rail de guidage (1a, 1b) pour la fixation de l'au moins une dent prothétique préconfectionnée (7) et l'au moins une tête de fraisage (2, 12, 14) et/ou l'au moins un outil de découpe est guidé entre les parties de rail de guidage (1a, 1b), où, de préférence, les deux parties de rail de guidage (1a, 1b) présentent les mêmes pistes de guidage (4) pour le guidage de l'au moins une tête de fraisage (2, 12, 14) et/ou de l'au moins un outil de découpe.

10. Procédé selon l'une des revendications précédentes, **caractérisé en ce que** le support (3) est un support en plusieurs parties, dans lequel l'au moins une dent prothétique préconfectionnée (7) est à fixée de manière amovible, où, de préférence, les parties du support en plusieurs parties sont à fixer les unes aux autres de manière amovible.

11. Procédé selon l'une des revendications précédentes, **caractérisé en ce que** l'au moins un modèle virtuel de l'au moins une dent prothétique (20, 24) façonnée à disposer dans la base de prothèse (26, 28) est créé dans l'étape A) de telle manière que la surface basale de l'au moins un modèle virtuel de l'au moins une dent prothétique (20, 24) façonnée est à former par l'au moins une tête de fraisage (2, 12, 14) menée en rotation autour de son axe de rotation et le long d'une ligne avec une forme symétrique en rotation connue.

12. Procédé de raccourcissement basal de dents prothétiques (7) pour la fabrication d'une prothèse dentaire (16, 18) présentant un procédé selon l'une des revendications précédentes, dans lequel, après l'étape D), au moins une dent prothétique préconfectionnée (7), qui est fixée ou sera fixée dans le support (3), est façonnée à la base avec l'au moins une tête de fraisage (2, 12, 14) et/ou l'au moins un outil de découpe, où l'au moins une tête de fraisage (2, 12, 14) et/ou l'au moins un outil de découpe est guidé par le rail de guidage (1) physique, où, ce faisant, le volume (8) à enlever de l'au moins une dent prothétique préconfectionnée (7) est enlevé par fraisage, où, de préférence, l'au moins une tête de fraisage (2, 12, 14) et/ou l'au moins un outil de découpe est guidé manuellement dans le rail de guidage (1) physique.

13. Procédé selon la revendication 12, **caractérisé en ce que**
lors du procédé, plusieurs têtes de fraisage (2, 12, 14) avec des diamètres variables de têtes de fraisage (2, 12, 14) sont employées, où les têtes de fraisage (2, 12, 14) sont guidées par diamètre croissant les unes après les autres dans le rail de guidage (1) physique, et/ou
lors du procédé, plusieurs outils de découpe avec des plans de découpe variables sont employés, où des outils coupants avec des plans de découpe sont guidés qui coupent les uns après les autres toujours plus profondément dans les côtés de base (11) des dents prothétiques (7).

14. Procédé de fabrication d'une prothèse dentaire (16, 18) présentant un procédé pour le raccourcissement à la base de dents prothétiques (7) selon l'une des revendications 12 ou 13, dans lequel, après le raccourcissement à la base de l'au moins une dent prothétique préconfectionnée (7) de l'au moins une dent prothétique (20, 24) façonnée est fixée, notamment, collée, dans une base de prothèse (26, 28) servant d'imitation de gencive, et
la base de prothèse (26, 28) est créée à l'aide d'un procédé CAM en se servant du modèle virtuel de la base de prothèse (26, 28) après l'étape A).

15. Dispositif pour mettre en oeuvre un procédé selon l'une des revendications 1 à 14, dans lequel le dispositif présente un module de calcul pour la modélisation d'une forme virtuelle du rail de guidage (1) à partir des données d'un volume (8) à enlever de dents prothétiques préconfectionnées (7) selon l'étape de procédé C) et un dispositif CAM comprend notamment une imprimante 3D pour la fabrication d'un rail de guidage (1), ou est relié ou peut être relié avec un tel dispositif CAM par le biais d'une interface du dispositif pour la mise en oeuvre de l'étape de procédé D).
